# EUROPÄISCHE PATENTANMELDUNG

(11) **EP 3 623 966 A1**
(43) Veröffentlichungstag der Anmeldung: **18.03.2020**
(21) Anmeldenummer: 18194397.8
(22) Anmeldetag: 14.09.2018
(51) Int. Cl.: G06F 17/50

(54) **VERFAHREN ZUM AUSLEGEN UND/ODER UMSETZEN UND/ODER ZUR VIRTUELLEN INBETRIEBNAHME EINES ANTRIEBSSYSTEMS UND ENTWURFS-SYSTEM**

(71) Anmelder: Siemens Aktiengesellschaft, 80333 München (DE)
(72) Erfinder: Gutzmer, Marcus, 30827 Garbsen (DE); Krause, Uwe, 30982 Pattensen (DE); Nolte, Uwe, 30890 Barsinghausen (DE); Schulz, Dennis, 30173 Hannover (DE)

(57) **Zusammenfassung**

Die Erfindung betrifft ein Verfahren zum Auslegen und/oder Umsetzen und/oder zur virtuellen Inbetriebnahme eines Antriebssystems (4) für die Bewegung wenigstens einer Last (1), bei dem
a) ein Anwendungsfall definiert wird, wobei die Definition des Anwendungsfalls zumindest eine Beschreibung eines mechanischen Systems (9) für die Lastbewegung und der Lastbewegung umfasst,
b) eine Beschreibung eines möglichen Antriebssystems (14) bereitgestellt wird,
c) ein Steuerungsprogramm (19) für eine mit dem möglichen Antriebssystem (14) zu verbindende oder verbindbare Steuerung bereitgestellt wird,
d) wenigstens eine Überprüfung des Steuerungsprogrammes (19) erfolgt, für die es an eine Test-Steuerung (27, 35) übergeben wird, die mit einem Test-Antriebssystem (29, 36) für das mögliche Antriebssystem (14) verbunden ist, und für die das Test-Antriebssystem (29, 36) von der Test-Steuerung (27, 35) gemäß dem Steuerungsprogramm (19) in Echtzeit angesteuert wird,
e) anhand erfasster und/oder berechneter Daten eine Beurteilung der Geeignetheit des Steuerungsprogrammes (19) und/oder des möglichen Antriebssystems (14) für den Anwendungsfall erfolgt.

Darüber hinaus betrifft die Erfindung ein Entwurfs-System.

## Beschreibung

Die Erfindung betrifft ein Verfahren zum Auslegen und/oder Umsetzen und/oder zur virtuellen Inbetriebnahme eines Antriebssystems für die Bewegung wenigstens einer Last. Darüber hinaus betrifft die Erfindung ein Entwurfs-System.

Zur motorisierten Bewegung von Lasten kommen Antriebssysteme zum Einsatz. Rein beispielhaft sei für die Bewegung einer Last das Öffnen bzw. Schließen einer oder mehrerer Aufzugtüren, der Transport einer oder mehrerer Lasten mittels eines Hubwagens sowie der Transport von Produkten oder der Gleichen entlang einer Fertigungs- und/oder Bearbeitungsstrecke genannt.

Abhängig von der anwenderspezifischen Fahrkurvenvorgabe in Kombination mit dem eingesetzten mechanischen System ergeben sich für die zu verwendenden Antriebskomponenten, etwa einen Antriebsmotor sowie eine zugehörige Steuerung, Energiequelle und ggf. ein Getriebe, spezielle Anforderungen. Dabei ist es für Anwender hochgradig interessant, bereits vor der Umsetzung, insbesondere vor dem Aufbau und der Inbetriebnahme des Gesamtsystems, eine Aussage über die Machbarkeit zu erhalten.

Ob Antriebskomponenten bzw. ein Antriebssystem mit solchen für einen konkreten Anwendungsfall geeignet ist bzw. sind, kann zumindest in einem gewissen Umfang durch mathematische Modellierung, insbesondere Durchführung von Simulationen vorab überprüft werden.

Selbst wenn auf einem solchen Wege ermittelt werden konnte, dass ein Antriebssystem vorgegebener Komponenten für einen konkreten Anwendungsfall geeignet ist, muss in der Regel jedoch von einem Anwender noch ein Steuerungsprogramm erstellt werden, welches den gewünschten Bewegungsablauf realisiert.

Dabei wäre es für Anwender auch hochgradig interessant, bereits vor der Umsetzung Informationen darüber zu erhalten, ob das Steuerungsprogramm in Kombination mit konkreten Antriebskomponenten eine fehlerfreie Funktion gewährleistet. Eine Überprüfung in dieser Hinsicht ist nach Kenntnisstand der Anmelderin bisher nicht möglich.

Eine umfassende Überprüfung, insbesondere bereits im Vorfeld des eigentlichen Aufbaus, kann somit nicht erfolgen. Da keine umfassende Überprüfung möglich ist, kann eine zuverlässige Funktion nicht immer gewährleistet werden.

Es ist daher eine Aufgabe der vorliegenden Erfindung, ein Verfahren der eingangs genannten Art anzugeben, über welches Antriebskonfigurationen erhalten werden können, die einen besonders zuverlässigen Betrieb gewährleisten. Darüber hinaus ist es eine Aufgabe der vorliegenden Erfindung, ein System anzugeben, mittels dem ein solches Verfahren durchgeführt werden kann.

Die Aufgabe wird gelöst durch ein Verfahren zum Auslegen und/oder Umsetzen und/oder zur virtuellen Inbetriebnahme eines Antriebssystems für die Bewegung wenigstens einer Last, bei dem
a) ein Anwendungsfall definiert wird, wobei die Definition des Anwendungsfalls zumindest eine Beschreibung eines mechanischen Systems für die Lastbewegung und der Lastbewegung, insbesondere in Form einer Fahrkurve, umfasst,
b) unter Berücksichtigung des Anwendungsfalles eine Beschreibung eines möglichen Antriebssystems bereitgestellt wird, welche die Angabe wenigstens eines Antriebsmotors umfasst,
c) ein Steuerungsprogramm für eine mit dem möglichen Antriebssystem zu verbindende oder verbindbare Steuerung bereitgestellt wird, wobei das Steuerungsprogramm Steuerbefehle für das mögliche Antriebssystem umfasst,
d) wenigstens eine Überprüfung des Steuerungsprogrammes erfolgt, für die das Steuerungsprogramm an eine Test-Steuerung übergeben wird, die mit einem Test-Antriebssystem für das mögliche Antriebssystem verbunden ist, und für die das Test-Antriebssystem von der Test-Steuerung gemäß dem Steuerungsprogramm in Echtzeit angesteuert wird, wobei
   eine Überprüfung des Steuerungsprogramms in einer zumindest teilweise realen Testumgebung erfolgt, wobei während der Ansteuerung des Test-Antriebssystems durch die Test-Steuerung Daten an der Test-Steuerung und/oder an dem Test-Antriebssystem erfasst und/oder berechnet werden, und/oder eine Überprüfung des Steuerungsprogramms in einer virtuellen Testumgebung erfolgt, wobei während der Ansteuerung des Test-Antriebssystems durch die Test-Steuerung Daten an der Test-Steuerung und/oder an dem Test-Antriebssystem erfasst und/oder berechnet werden, und
e) anhand der erfassten und/oder berechneten Daten eine Beurteilung der Geeignetheit des Steuerungsprogrammes (und/oder des möglichen Antriebssystems für den Anwendungsfall erfolgt.

Mit anderen Worten ist erfindungsgemäß vorgesehen, einen Workflow insbesondere für Anwender zur Verfügung zu stellen, der die unterschiedlichen Antriebsaufgaben bereits unterstützt, wobei bevorzugt von einem Anwender ein gewünschter konkreter Anwendungsfall definiert, konkrete Antriebskomponenten identifiziert und auch ein Steuerungsprogramm erstellt wird, und dann eine umfassende Beurteilung des Steuerungsprogramms zusammen mit den konkreten Antriebskomponenten insbesondere hinsichtlich Leistungsfähigkeit und Belastbarkeit erfolgt.

Durch das erfindungsgemäße Verfahren kann die Umsetzungszeit erheblich verkürzt werden, da die Programmierung des Steuerungsprogramms direkt nach der Bestellung erfolgen kann und nicht abgewartet werden muss, bis die Anlage aufgebaut ist, um die jeweiligen Funktionstests durchführen zu können. Ein weiterer Vorteil ist, dass die Funktionstests digital durchgeführt werden können und somit das Risiko einer Anlagenbeschädigung eliminiert werden kann.

Es kann auch eine umfassende Entwicklungsunterstützung insbesondere bei fehlendem Zugriff auf Anlagen-Hardware erfolgen. Das erfindungsgemäße Verfahren ermöglicht ein Outsourcing, die Vorbereitung von Änderungen beispielsweise an Montagebändern oder dergleichen. Es kann auch durchgeführt werden, um die Lieferzeit von Komponenten zu überbrücken und insbesondere ein zugehöriges Steuerungsprogramm bereits im Vorfeld in sicherer Umgebung zu testen.

Im Rahmen der Definition des konkreten Anwendungsfalles in Schritt a) des erfindungsgemäßen Verfahrens werden bevorzugt als Beschreibung der zu realisierenden, gewünschten Lastbewegung eine Fahrkurve und/oder ein Lastprofil in universeller Form zur Verfügung gestellt, dies bevorzugt von einem Anwender. Eine solche Angabe bzw. Beschreibung des Bewegungsprofils hat sich als besonders geeignet erwiesen. Eine Fahrkurve kann beispielsweise als Drehzahl oder Geschwindigkeit über der Zeit und/oder Strecke dargestellt sein und ein Lastprofil beispielsweise als Lastmoment über der Zeit und/oder Strecke.

Die Definition des konkreten Anwendungsfalles umfasst weiterhin eine Beschreibung eines mechanischen Systems für die bzw. zu der Lastbewegung. Das mechanische System umfasst insbesondere die wenigstens eine Last und Komponenten zur Realisierung der Lastbewegung. Handelt es sich bei der zu bewegenden Last zum Beispiel um eine (oder mehrere) Aufzugstür(en) bzw. Aufzugstürflügel, umfasst das zugehörige mechanische System zweckmäßiger Weise die Türmechanik, die beispielsweise eine oder mehrere Umlenkrollen, einen oder mehrere Zahnriemen, einen oder mehrere Gegenwichte und dergleichen umfassen kann. Weitere Beispiele für mechanische Systeme können durch ein Fahrwerk, ein Hubwerk (rein vertikale Bewegung), ein System mit Ritzel(n) und Zahnstangen(n), Kugelrollspindel(n), bzw. eine Anordnung mit einem oder mehreren Antriebsrädern sowie die zu bewegende wenigstens eine Last gegeben sein. Die wenigstens eine zu bewegende Last, die einen Teil des (gesamten) mechanischen Systems bildet, wird bevorzug im Rahmen der Beschreibung des mechanischen Systems ebenfalls beschrieben bzw. definiert.

Die Beschreibung des möglichen Antriebssystems (Schritt b)), welches für die Realisierung der Lastbewegung zum Einsatz kommen soll, umfasst zumindest die Angabe wenigstens eines Antriebsmotors. Diese kann weiterhin bevorzugt die Angabe einer Antriebsmotorsteuerung und/oder einer Speisung bzw. Stromversorgung, insbesondere eines Netzteils, und/oder eines Getriebes sowie anderer Komponente umfassen, was vom konkreten Anwendungsfall abhängt. Zur Beschreibung des Antriebssystems kann beispielsweise ein Typ einer oder mehrerer dieser Komponenten angegeben werden, wobei dann für den Typ bevorzugt die technischen Spezifikationen bekannt sind bzw. ermittelt/abgefragt werden können.

Es versteht sich, dass ein mögliches Antriebssystem nur einen oder auch mehrere Antriebsmotoren umfassen kann. In gleicher Weise kann ein Antriebssystem eine oder auch mehrere Antriebsmotorsteuerungen, eines oder mehrere Netzteile bzw. eines oder mehrere Getriebe umfassen. Die Anzahl der Komponenten hängt vom konkreten Anwendungsfall ab. Soll beispielsweise eine Aufzugtür mittels eines Antriebssystems zwischen einer offenen und geschlossenen Stellung hin und her bewegbar sein, kann ein einzelner Antriebsmotor ausreichend sein. Soll mit einem Antriebssystem beispielsweise in einer Fertigungsanlage die Bewegung eines Produktes von einer ersten Stelle mittels eines Greifarms auf ein Förderband und mit dem Förderband bis zu einer zweiten Stelle umgesetzt werden, wäre sowohl für den Greifarm als auch das Förderband jeweils wenigstens ein Antriebsmotor erforderlich. Ein zugehöriges Steuerungsprogramm müsste dann (koordinierte) Befehle für Greifarm und Förderband umfassen.

Besonders bevorzugt wird für die Definition eines konkreten Anwendungsfalles und/oder für die Beschreibung des möglichen Antriebssystems insbesondere einem Anwender in einer Benutzeroberfläche eines geeigneten Computerprogramms eine Mehrzahl von Auswahlmöglichkeiten zur Verfügung gestellt.

Eine bevorzugte Ausführungsform des erfindungsgemäßen Verfahrens zeichnet sich entsprechend dadurch aus, dass die Definition des Anwendungsfalles gemäß Schritt a) und/oder die Bereitstellung der Beschreibung des möglichen Antriebssystems gemäß Schritt b) durch einen Anwender in der Benutzeroberfläche eines geeigneten Programmes erfolgt, wobei der Anwender bevorzugt den Anwendungsfall definiert und/oder das mögliche Antriebssystem beschreibt, indem er in der Benutzeroberfläche Parameter eingibt und/oder indem er aus einer Mehrzahl von ihm in der Benutzeroberfläche angebotenen Auswahlmöglichkeiten auswählt.

Auswahlmöglichkeiten können zum Beispiel durch häufig vorkommende Anwendungsfälle einschließlich mechanischer Systeme gegeben sein, wobei rein beispielhaft eine klassische Hubvorrichtung oder eine Türanordnung für einen Aufzug genannt sei. Weiterhin bevorzugt steht ebenfalls in einer Benutzeroberfläche eines geeigneten Programms die Möglichkeit zur Verfügung, individuelle spezifische Anwendungsfälle durch Eingabe einer detaillierten Beschreibung zu definieren.

Was die Beschreibung des möglichen Antriebssystems für den Anwendungsfall angeht, können Auswahlmöglichkeiten in Form von wählbaren Typen zugehöriger Komponenten, etwa Antriebsmotor-Typen, Getriebe-Typen und so weiter vorliegen. Vorteilhaft ist, wenn die in der Benutzeroberfläche bereitgestellten Auswahlmöglichkeiten aus einer Gesamtheit möglicher Antriebskomponenten automatisiert in Abhängigkeit des in Schritt a) definierten Anwendungsfalles vorausgewählt sind, wobei die Vorauswahl insbesondere auf eine Gruppe von Komponenten beschränkt ist, die prinzipiell für den definierten Anwendungsfall in Frage kommen.

Um eine Vorauswahl treffen zu können, kann eine Lastkurve berechnet werden.

In Weiterbildung des erfindungsgemäßen Verfahrens ist entsprechend vorgesehen, dass nach Schritt a) und vor Schritt b) in einem Schritt a1) unter Berücksichtigung des mechanischen Systems und/oder der Lastbewegung eine erforderliche Kraft und/oder eine resultierende Lastkurve berechnet wird. Es kann sich insbesondere um die Lastkurve an einer Motorwelle handeln. Um zu bewerten ob eine entsprechende Komponente, insbesondere ein Motor für eine konkrete Anwendung geeignet ist, wird bevorzugt die Kraft berechnet, welche ein Motor aufbringen muss, um die Mechanik nach definierter Vorgabe zu bewegen. Diese Kraft wird über die Motorwelle abgegeben. Daher bezieht sich die berechnete Lastkurve bevorzugt auf eine Motorwelle.

Weiterhin bevorzugt wird auf Basis der berechneten Lastkurve von einer geeigneten Software eine Liste von möglichen Antriebskomponenten, welche für die entsprechende Anwendung geeignet sind, dargestellt. Aus einer solchen Liste kann der Anwender dann einzelne Antriebskomponenten wählen, beispielsweise einen oder mehrere Antriebsmotor(en), eines oder mehrere Netzteil(e), eine oder mehrere Antriebsmotorsteuerung(en), und/oder eines oder mehrere Getriebe kombinieren.

Es kann auch vorgesehen sein, dass die physikalischen Eigenschaften einzelner Teilkomponenten beschrieben bzw. festgelegt werden. Teilkomponenten des Gesamtsystems können durch Komponenten des möglichen Antriebssystems, beispielsweise wenigstens einen Motor, wenigstens ein Netzteil, wenigstens eine Motorsteuerung, wenigstens ein Getriebe, wenigstens eine Anschlussleitung, und dergleichen und/oder Komponenten des mechanischen Systems, z.B. eine oder mehrere Umlenkrolle(n) oder dergleichen und/oder die wenigstens eine zu bewegende Last gegeben sein. Die Festlegung bzw. Beschreibung physikalischer Eigenschaften einer oder mehrerer Teilkomponenten erfolgt zweckmäßiger Weise dann, wenn keine "Standardbeschreibung" existiert, die ausgewählt werden kann. Es kann beispielsweise ein benutzerdefinierter Motor angelegt werden, wobei bzw. indem die physikalischen Eigenschaften des Motors von einem Benutzer beschrieben werden.

Insbesondere, um die Realisierbarkeit des Anwendungsfalles mit den gewählten Antriebskomponenten im Verbund zu überprüfen, kann im Anschluss an Schritt b) eine Simulation des (Gesamt-)Systems erfolgen.

Entsprechend zeichnet sich eine weitere vorteilhafte Ausführungsform des erfindungsgemäßen Verfahrens dadurch aus, dass nach Schritt b) und vor Schritt c) in einem Schritt b1) eine Simulation des Gesamtsystems bevorzugt umfassend das mechanische System, das mögliche Antriebssystem und insbesondere die Lastbewegung, erfolgt, wobei die Simulation bevorzugt unter Verwendung eines Modells durchgeführt wird, welches Teilmodelle zumindest für das mechanische System und/oder das beschriebenen mögliche Antriebssystem umfasst.

Dann kann weiterhin bevorzugt vorgesehen sein, dass die Simulation insbesondere dem Anwender detaillierte Simulationsdaten zur Systembewertung zur Verfügung stellt.

Auf Basis des Ergebnisses der in Schritt b1) durchgeführten Simulation kann eine Entscheidung getroffen werden, ob das in Schritt b) beschriebene mögliche Antriebssystem für den in Schritt a) definierten Anwendungsfall geeignet ist oder nicht. Für den Fall, dass es nicht geeignet ist, wird bevorzugt zu Schritt b) zurückgekehrt, wobei eine Beschreibung eines anderen möglichen Antriebssystems, welches sich durch wenigstens eine andere Komponente, beispielsweise einen anderen Antriebsmotor und/oder eine andere Antriebsmotorsteuerung und/oder ein anderes Netzteil und/oder ein anderes Getriebe auszeichnet, bereitgestellt wird.

Schlägt die Überprüfung fehl, werden zweckmäßiger Weise eine oder mehrere Antriebskomponenten angepasst und die Simulation wird im Anschluss - für das neu zusammengestellte mögliche Antriebssystem - erneut durchgeführt. Es kann vorgesehen sein, dass erst nach erfolgreicher Überprüfung über eine Simulation der nächste Schritt, also der Schritt c) eingeleitet wird.

Erfindungsgemäß ist weiterhin vorgesehen, dass für den definierten Anwendungsfall und ein gegebenes mögliches Antriebssystem, insbesondere mit bestimmtem bzw. bestimmten Antriebsmotortyp(en) und bestimmtem bzw. bestimmten Antriebsmotorsteuerungs-Typ(en) und/oder bestimmtem bzw. bestimmten Netzteil-Typ(en) und/oder bestimmtem bzw. bestimmten Getriebe-Typ(en), die von einem Anwender definierten Steuerbefehle geprüft werden, was erfindungsgemäß durch wenigstens eine Überprüfung eines zugehörigen Steuerungsprogrammes in einer Testumgebung, konkret in einer teilweise realen Testumgebung und/oder in einer virtuellen Testumgebung in Echtzeit erfolgt.

Durch eine Überprüfung mit Echtzeit-Bezug kann die ordnungsgemäße Funktion des insbesondere anwenderseitig erstellten Steuerungsprogrammes in Verbindung mit den konkret gewählten möglichen Antriebskomponenten überprüft werden. Es ist somit ein umfassender Funktionstest möglich.

Für die wenigstens eine Überprüfung wird erfindungsgemäß ein bevorzugt von einem Anwender bereitgestelltes Steuerungsprogramm an eine insbesondere speicherprogrammierbare Test-Steuerung übergeben, die mit einem Test-Antriebssystem für das beschriebene Antriebssystem verbunden ist, und für die das Test-Antriebssystem von der insbesondere speicherprogrammierbaren Test-Steuerung gemäß dem Steuerungsprogramm in Echtzeit angesteuert wird.

Bei der Test-Steuerung, die im Rahmen der wenigstens einen Überprüfung des Steuerungsprogrammes zum Einsatz kommt, kann es sich sowohl um eine physische, körperliche Test-Steuerung, etwa eine körperliche Test-SPS handeln, als auch um eine virtuelle Steuerung, beispielsweise eine SoftSPS. Gleiches gilt für das Test-Antriebssystem, welches durch ein physisches, körperliches Antriebssystem gegeben sein kann, beispielsweise mit wenigstens einem physischen, körperlichen Test-Antriebsmotor, oder auch nur virtuell, insbesondere als digitaler Zwilling, welcher das beschriebene Antriebssystem abbildet, und/oder in Form eines Emulationsalgorithmus insbesondere auf geeigneter Hardware.

Erfindungsgemäß besteht sowohl die Möglichkeit einer Überprüfung unter Rückgriff auf eine Testumgebung mit physischen Komponenten als auch eine Überprüfung unter Rückgriff auf eine Testumgebung nur mit "virtuellen" bzw. "digitalen" Komponenten als auch eine Überprüfung unter Rückgriff auf eine Testumgebung, die sowohl reale, physische als auch virtuelle Komponenten umfasst. Auch kann nicht nur eine Überprüfung stattfinden, sondern mehrere Überprüfungen, etwa eine in einer zumindest teilweise realen Testumgebung und eine in einer rein virtuellen Testumgebung.

Es kann entsprechend vorgesehen sein, dass eine teilweise reale Testumgebung, sofern vorhanden, eine physische Test-Steuerung und ein virtuelles Test-Antriebssystem oder eine virtuelle Test-Steuerung und ein physisches Test-Antriebssystem oder eine physische Test-Steuerung und ein physisches Test-Antriebssystem umfasst.

Alternativ oder zusätzlich kann eine virtuelle Testumgebung, sofern vorhanden, eine virtuelle Test-Steuerung und ein virtuelles Test-Antriebssystem umfassen.

Besonders bevorzugt wird im Rahmen der wenigstens einen Überprüfung des Steuerungsprogrammes in Schritt d) das in Schritt a) beschriebene mechanische System in Echtzeit emuliert.

Das beschriebene mechanische System kann beispielsweise unter Verwendung eines Emulationsalgorithmus in Echtzeit emuliert werden, was sich als geeignet erwiesen hat. Ist ein Emulationsalgorithmus vorhanden bzw. wird ein solcher verwendet, wird dieser bevorzugt gemäß der Beschreibung des mechanischen Systems aus Schritt a) parametriert.

Alternativ oder zusätzlich ist es möglich, dass das beschriebene mechanische System durch ein Emulations-Lastsystem emuliert wird, wobei bevorzugt mit dem Emulations-Lastsystem ein reales Test-Antriebssystem oder zumindest wenigstens ein zu dem wenigstens einen Antriebsmotor des beschriebenen Antriebssystems baugleicher oder ähnlicher realer Test-Antriebsmotor derart belastet wird, dass die resultierende Echtzeit-Lastkurve bis auf eine zulässige Abweichung derjenigen Lastkurve entspricht, die sich ergeben würde, wenn die wenigstens eine Last mittels dem beschriebenen Antriebssystem entlang der vorgegebenen Bahn bewegt würde.

Eine teilweise reale Testumgebung kann z.B. einen Teststandsaufbau, also eine Testbench, mit einer oder mehreren realen, baugleichen oder zumindest ähnlichen Antriebskomponenten und insbesondere einer Emulations-Lastmaschine umfassen.

Kommt ein Emulations-Lastsystem für eine Emulation des mechanischen Systems zum Einsatz, kann dieses mit einem Teststandsaufbau verbunden sein oder einen Teil eines solchen bilden.

Insbesondere eine virtuelle bzw. digitale Testumgebung umfasst bevorzugt einen oder mehrere digitale Zwillinge bzw. Modelle, welche(r) eine oder mehrere Teilkomponente(n) des Gesamtsystems abbildet bzw. abbilden. Bevorzugt umfasst eine rein virtuelle Testumgebung eine virtuelle insbesondere speicherprogrammierbare Steuerung, einen digitalen Zwilling als Test-Antriebssystem, welcher das beschriebene Antriebssystem abbildet und/oder einen digitalen Zwilling, welcher das mechanische System abbildet. Es kann beispielsweise ein ERTEC-Controller mit rein digitalem Emulationsalgorithmus als digitaler Zwilling bzw. mehrere digitale Zwillinge für Test-Steuerung, Test-Antriebssystem und mechanisches System bereitstehen.

Auch eine teilweise reale Testumgebung kann einen oder mehrere digitale Zwillinge umfassen. Z.B. kann eine reale, physische Test-Steuerung vorgesehen sein, aber das Test-Antriebssystem virtuell vorliegen, insbesondere durch einen digitalen Zwilling für das in Schritt b) beschriebene Antriebssystem gegeben sein.

Virtuelle Komponenten einer teilweise realen und/oder einer virtuellen Testumgebung umfassen bevorzugt Emulationsalgorithmen. Ist einer oder sind mehrere Emulationsalgorithmen vorhanden bzw. werden solche genutzt, wird bevorzugt wenigstens ein Emulationsalgorithmus gemäß dem in Schritt a) definierten Anwendungsfall und/oder dem in Schritt b) beschriebenen Antriebssystem parametriert.

Es sei angemerkt, dass unter einer Emulation eine Abbildung zu verstehen ist, die einen Echtzeit-Bezug hat.

Vor allem durch den Einsatz Echtzeit-fähiger, bevorzugt IRT-fähiger Emulations-Hardware lassen sich auch hochperformante Motion-Control-Anwendungen emulieren.

Die Abkürzung IRT steht dabei für "isochronous real time".

Insbesondere im Rahmen einer Überprüfung in einer virtuellen Testumgebung läuft das Steuerungsprogramm bevorzugt auf einer virtuellen SPS, also SoftSPS, in Echtzeit und tauscht Daten mit einem virtuellen Testaufbau, insbesondere einem digitalen Zwilling eines Antriebsmotorsteuergerätes über die gleiche Schnittstelle aus, wie sie auch auf realen Geräten verfügbar wäre (z.B. PROFInet). Eine solche Emulation liefert dann insbesondere mit dem Modell des mechanischen Systems aus Schritt a) und dem Steuerungsprogramm aus Schritt c) das zu erwartende Fahrverhalten des projektierten Systems.

Rein digitale Emulationen bieten gegenüber der Nutzung realer Teststandsaufbauten in der Regel den Vorteil höherer Flexibilität, höherer Verfügbarkeit und eines verringerten Pflegeaufwandes. Auch die Bereitstellung mehrerer Testumgebungen, die von mehreren Anwendern parallel genutzt werden können, ist dann deutlich einfacher als wenn diese mit physikalischen Komponenten aufgebaut werden müssen.

Die erfindungsgemäße Überprüfung in einer zumindest teilweise realen und/oder digitalen Testumgebung ermöglicht es insbesondere, dass beispielsweise die Anlage eines Anwenders durch das Auftreten möglicher Fehlfunktionen bei einer Programmevaluierung nicht beschädigt wird. Auch ist eine Entwicklung und eine anschließende Überprüfung eines anwenderseitigen Steuerungsprogrammes ohne das Vorhandensein konkret gewählter Antriebskomponenten möglich.

In der Regel sind Antriebsmotoren jeweils (eigene) Antriebsmotorsteuerungen zugeordnet, die wiederrum von einer übergeordneten Steuerung, die insbesondere durch eine bevorzugt speicherprogrammierbare Steuerung (SPS) gegeben sein kann, Steuerbefehle erhalten. Die Antriebsmotorsteuerung enthält ihre Fahrkurvenvorgaben in einem solchen Fall von der bevorzugt speicherprogrammierbaren Steuerung, welche als die übergeordnete Steuerung fungiert. Die zuvor abgelegte bzw. definierte Fahrkurve ist daher in bevorzugter Ausgestaltung in einem Anwenderprogramm auf einer SPS zu implementieren. Die Entwicklung bzw. Erstellung des Steuerungsprogrammes erfolgt bevorzugt durch den Anwender und wird auf eine reale oder virtuelle SPS projektiert.

(Speicherprogrammierbare) Steuerungen können als physische (speicherprogrammierbare) Steuerungen insbesondere in Form entsprechend ausgebildeter Geräte bzw. Einrichtungen vorliegen. Rein beispielshaft für eine "physische" SPS sei das am Markt erhältliche Modell SIMATIC S7 1200/1500 aus dem Hause der Anmelderin genannt. Es ist auch möglich, dass (speicherprogrammierbare) Steuerungen Software-implementiert sind, etwa in Form einer Software bzw. Software-Komponente bzw. Software-Sammlung auf allgemeiner Hardware, etwa in Form eines PCs vorliegen.

In besonders bevorzugter Ausgestaltung des erfindungsgemäßen Verfahrens ist vorgesehen, dass der Zugriff auf die zumindest teilweise reale Testumgebung und/oder der Zugriff auf die virtuelle Testumgebung, insbesondere der Zugriff auf die Test-Steuerung dieser, über eine Cloud bereitgestellt wird und insbesondere erfolgt.

Entsprechend wird bevorzugt auch der Zugriff auf ein reales, physisches und/oder ein virtuelles Test-Antriebssystem über eine Cloud bereitgestellt und erfolgt insbesondere über die Cloud.

Unter einer Cloud bzw. Cloud-Computing wird dabei insbesondere die Bereitstellung von IT-Infrastruktur als Dienstleistung ggf. von einem entfernten Standort aus verstanden. Bei einer Cloud wird die Hardware somit nicht von dem Nutzer einer Anwendung selbst betrieben oder bereitgestellt. Die Anwendungen bzw. Daten, auf die Anwender zugreift, befinden sich nicht auf dem lokalen Rechner sondern in der sogenannten Cloud. Eine Cloud kann über das Internet erreichbar sein, oder auch von einem Unternehmen als sogenannte private Cloud betrieben werden, bei welcher die IT-Infrastruktur über ein Netzwerk, z.B. ein Intranet des Unternehmens, erreichbar ist.

Über eine Cloud kann ein Anwender problemlos und mit geringem Aufwand auch auf einen entfernt lokalisierten Teststandsaufbau bzw. auf entfernt angeordnete Hardware, auf der eine virtuelle bzw. digitale Testumgebung bereitsteht, zugreifen.

Der Zugriff über eine Cloud ermöglicht es, dass für die erfindungsgemäße umfassende Prüfung lokal kein Speicherplatz und/oder keine Rechenleistung bereitgestellt werden müssen. Über eine Cloud lassen sich dabei Geräte Standort-unabhängig und sicher miteinander vernetzen. Eine Cloud-Plattform ermöglicht es auch, dass Entwickler eigene Anwendungen und Dienste integrieren und zur Verfügung stellen können.

Um eine via Cloud angebundene Emulation, insbesondere für ein Test-Antriebssystem und/oder ein mechanisches System, zu starten, werden bevorzugt zunächst eine zuvor erstellte Systemmodellierung, insbesondere umfassend
- die Beschreibung des möglichen Antriebssystems, gemäß der - im Falle der realen Emulation - reale Test-Antriebskomponenten gewählt und an dem Teststandsaufbau (Testbench) aufgebaut bzw. zur Verfügung gestellt werden,
- die Beschreibung des mechanischen Systems, die im Falle der Emulation des mechanischen Systems mittels einer Emulations-Lastmaschine insbesondere eines Teststandsaufbaus zur Parametrierung der Emulations-Lastmaschine und im Falle einer Emulation des mechanischen Systems durch einen Emulationsalgorithmus zur Parametrierung des Emulationsalgorithmus herangezogen wird,

und ein zu testendes Steuerungsprogramm, das auf eine reale und/oder virtuelle insbesondere speicherprogrammierbare Test-Steuerung aufzuspielen ist und das reale und/oder das virtuelle Test-Antriebssystem zu steuern hat, in die Cloud geladen. Anschließend werden Systemmodellierung und Steuerungsprogramm an einen Emulations-Verwaltungsserver weitergeleitet. Dieser fungiert bevorzugt als IO-Supervisor und führt eine Engineering Plattform, beispielsweise das TIA-Portal aus dem Hause der Anmelderin, aus.

Nach Erhalt des Steuerungsprogrammes kann dieses automatisiert in der aktuellen Anlagenprojektierung in der Engineering Plattform, insbesondere dem TIA-Portal, eingebunden und auf den IO-Controller geladen werden. In der Umgebung des TIA-Portals beispielsweise könnte hierfür das Add on Paket "TIA Portal Openness" genutzt werden. Über dieses Add on wird eine offene Schnittstelle für das Engineering mit dem TIA-Portal bereitgestellt, wodurch es möglich wird, das TIA-Portal über externe Programme zu steuern. Somit lässt sich eine entsprechende Automatisierung problemlos realisieren.

Weiterhin bevorzugt kann dann neben der Aktualisierung der Anlagenprojektierung eine Parametrierung des Berechnungsalgorithmus (Emulationsalgorithmus für den digitalen Zwilling) einer Emulationshardware nach den Vorgaben der erhaltenen Systemmodellierung erfolgen. Dann kann die Emulation gestartet werden.

Insbesondere über eine Benutzeroberfläche in der Cloud-Anwendung können im Steuerungsprogramm hinterlegte Variablen nach Wunsch gesetzt werden.

Weiterhin bevorzugt werden dem Anwender Statusinformationen in Bezug auf den Emulationsvorgang bereitgestellt.

Während der Emulation können zugehörige Daten insbesondere an einen Anwender übermittelt werden. Bevorzugt erfolgt auch eine Aufbereitung der Daten in der Cloud-Anwendung.

Bei Daten, die erfasst bzw. berechnet werden, und auf Basis derer in Schritt e) eine Beurteilung erfolgt, kann es sich beispielsweise um Größen wie den (berechneten) Geschwindigkeits- oder Positionsverlauf der Mechanik handeln.

Bevorzugt werden die Daten für einen Benutzer bzw. Anwender visualisiert, etwa in Tabellen und/oder Diagrammen, beispielsweise in der Benutzeroberfläche eines Programmes, dargestellt.

Es sei angemerkt, dass auch wenn der Cloud-Zugriff von Vorteil ist, ein solcher nicht zwingend gegeben sein muss. Insbesondere eine (rein) digitale Testumgebung kann auch lokal bei einem Anwender zur Verfügung stehen bzw. zur Verfügung gestellt werden.

Weiterhin bevorzugt kann vorgesehen sein, dass Statistiken über Anwendungsfälle geführt werden, um Antriebssystemkomponenten kontinuierlich zu optimieren. Hierfür kann eine insbesondere mit einem ggf. via Cloud erreichbaren Emulations-Verwaltungsserver verbundene Datenbank vorgesehen sein, auf welcher statische Daten hinterlegt werden.

Auch kann vorgesehen sein, dass im Anschluss an den Aufbau des Antriebssystems in einem Schritt g) eine Validierung erfolgt, wobei überprüft wird, ob das Steuerungsprogramm zusammen mit dem Antriebssystem fehlerfrei funktioniert, und insbesondere für den Fall, dass dem nicht so ist, eine Anpassung der zumindest teilweise realen Testumgebung und/oder der virtuellen Testumgebung, insbesondere eines Emulationsalgorithmus für das in Schritt a) beschriebene mechanische System und/oder eines Emulationsalgorithmus für das in Schritt b) beschriebene Antriebssystem dieser, erfolgt. Somit kann überprüft werden, ob eine Steuerungssoftware zusammen mit konkreten Antriebskomponenten in einer endgültigen Anwendungsumgebung tatsächlich fehlerfrei funktioniert. Sollte eine solche Überprüfung ergeben, dass das Ergebnis noch nicht einwandfrei ist, kann eine Anpassung einer verwendeten Testumgebung bzw. Emulation, beispielswiese eines Emulationsalgorithmus, der für eine Emulation des Antriebssystems verwendet wurde und/oder eines Emulationsalgorithmus, der für eine Emulation des mechanischen Systems verwendet wurde, erfolgen.

Dabei kann auch iterativ vorgegangen werden, insbesondere mehrfach angepasst werden, um eine Optimierung zu erzielen.

Das erfindungsgemäße Verfahren kann durchgeführt werden, um eine Antriebskonfiguration zu planen bzw. erstmalig zu erstellen. Es ist aber auch möglich, unter Durchführung des erfindungsgemäßen Verfahrens zu prüfen, ob eine bereits bestehende, installierte Antriebskonfiguration für einen neuen Anwendungsfall geeignet ist.

Entsprechend ist in Weiterbildung vorgesehen, dass in Schritt b) die Beschreibung eines bereits installierten und im Betrieb gewesenen Antriebssystems, dessen Eignung für einen neuen Anwendungsfall überprüft werden soll, als Beschreibung eines möglichen Antriebssystems bereitgestellt wird, oder in Schritt b) die Beschreibung eines zu planenden, noch nicht installierten Antriebssystems als Beschreibung eines möglichen Antriebssystems bereitgestellt wird.

Ein Anwendungsfall für ein bestehendes oder auch ein noch zu planendes Antriebssystem kann durch einen Normal-, Sonder- oder auch durch einen Extremfall gegeben sein, der dann - sicher und ohne Gefahr - überprüft werden kann.

Bevorzugt wird, insbesondere, sofern das erfindungsgemäße Verfahren zur Planung bzw. Auslegung eines noch nicht installierten Antriebssystems durchgeführt wird, sofern die Beurteilung des Steuerungsprogrammes und/oder des möglichen Antriebssystems in Schritt e) positiv ausfällt, in einem Schritt f) das mögliche Antriebssystem installiert und in Betrieb genommen, und insbesondere mit dem in Schritt c) bereitgestellten Steuerungsprogramm angesteuert.

Wird das erfindungsgemäße Verfahren zur Überprüfung, ob eine bereits bestehendes Antriebssystem für einen neuen Anwendungsfall geeignet ist, durchgeführt, wird bevorzugt im Anschluss an ein positives Emulations-Ergebnis das Antriebssystem, das dann in Schritt b) als für den Anwendungsfall mögliches Systems beschrieben wurde, weiter verwendet, und insbesondere mit dem in Schritt c) bereitgestellten Steuerungsprogramm angesteuert.

Ganz besonders bevorzugt werden die Schritte a), a1), b), b1), c), d), e) und f) sowie ggf. g) nacheinander durchgeführt, sodass ein besonders vollständiger Workflow für eine umfassende Überprüfung absolviert wird.

Weiterhin kann vorgesehen sein, dass das mechanische System ein nichtlineares Lastsystem umfasst oder durch ein solches gebildet ist. Das erfindungsgemäße Verfahren hat sich auch für nichtlineare Fälle als besonders geeignet erwiesen.

Im Rahmen der wenigstens einen Überprüfung des Steuerungsprogramms erfolgt der Datenaustausch zwischen der Test-Steuerung und dem Test-Antriebssystem weiterhin bevorzugt über ein Echtzeit-Kommunikationsprotokoll, insbesondere PROFINET oder Ethernet oder PROFIDRIVE oder EtherCAT.

Eine weitere Vorteilhafte Ausführungsform des erfindungsgemäßen Verfahrens zeichnet sich dadurch aus, dass in Schritt b) die Beschreibung eines möglichen Antriebssystems bereitgestellt wird, welches mehrere Antriebsmotoren umfasst, und anhand von Daten, die im Rahmen der wenigstens einen Überprüfung des Steuerungsprogramms während der Ansteuerung des Test-Antriebssystems durch die Test-Steuerung an der Test-Steuerung und/oder an dem Test-Antriebssystem erfasst und/oder berechnet werden bzw. wurden, ermittelt wird, ob es im Rahmen der Ausführung des Steuerungsprogramms zu Kollisionen kommt.

Insbesondere in demjenigen Fall, dass ein mögliches Antriebssystem mehrere Antriebsmotoren umfasst, kann das erfindungsgemäße Verfahren auch gezielt durchgeführt werden, um zu überprüfen, ob es zu Kollisionen kommt, wenn das Steuerungsprogramm ausgeführt wird.

Darüber hinaus kann vorgesehen sein, dass Daten, die im Rahmen der wenigstens einen Überprüfung des Steuerungsprogramms an der Test-Steuerung und/oder an dem Test-Antriebssystem ng erfasst und/oder berechnet werden bzw. wurden, einem Anwender insbesondere in Echtzeit in einer 3-D-Umgebung, welche bevorzugt das mögliche Antriebssystem und/oder mechanische System visualisiert, dargestellt werden. Auf diese Weise können Ergebnisse des wenigstens einen Tests einem Anwender besonders komfortabel präsentiert werden und es ist sehr bequem, zügig und detailliert möglich zu beurteilen, ob ein getestetes Steuerungsprogramm zu einem gewünschten Ergebnis führt.

Ein weiterer Gegenstand der Erfindung ist ein Entwurfs-System zur Durchführung des Verfahrens nach einem der vorhergehenden Ansprüche, welches ausgebildet und/oder eingerichtet ist, um
a) die Definition eines Anwendungsfalles entgegenzunehmen, wobei die Definition des Anwendungsfalls zumindest eine Beschreibung eines mechanischen Systems für die Lastbewegung und der Lastbewegung, insbesondere in Form einer Fahrkurve (9), umfasst,
b) eine unter Berücksichtigung des Anwendungsfalles erstellte Beschreibung eines möglichen Antriebssystems entgegenzunehmen, welche die Angabe wenigstens eines Antriebsmotors (7) umfasst,
c) ein Steuerungsprogramm (17) für eine mit dem möglichen Antriebssystem zu verbindende oder verbindbare Steuerung übergeben zu bekommen, wobei das Steuerungsprogramm (17) Steuerbefehle für das mögliche Antriebssystem (4) umfasst,
d) wenigstens eine Überprüfung des Steuerungsprogrammes (17) durchzuführen, für die das Steuerungsprogramm (17) an eine Test-Steuerung (25, 32) übergeben wird, die mit einem Test-Antriebssystem für das mögliche Antriebssystem verbunden ist, und für die das Test-Antriebssystem von der Test-Steuerung (25, 32) gemäß dem Steuerungsprogramm (17) in Echtzeit angesteuert wird, wobei eine Überprüfung des Steuerungsprogramms (17) in einer zumindest teilweise realen Testumgebung (18) erfolgt, wobei während der Ansteuerung des Test-Antriebssystems durch die Test-Steuerung (25, 32) Daten an der Test-Steuerung (25, 32) und/oder an dem Test-Antriebssystem erfasst und/oder berechnet werden,
   und/oder eine Überprüfung des Steuerungsprogramms (17) in einer virtuellen Testumgebung (19) erfolgt, wobei während der Ansteuerung des Test-Antriebssystems durch die Test-Steuerung (32) Daten an der Test-Steuerung (25, 32) und/oder an dem Test-Antriebssystem erfasst und/oder berechnet werden, und
e) die erfassten und/oder berechneten Daten insbesondere einem Anwender (21) zur Beurteilung der Geeignetheit des Steuerungsprogrammes (17) und/oder des möglichen Antriebssystems für den Anwendungsfall bereitzustellen.

Unter Verwendung eines erfindungsgemäßen Systems kann das erfindungsgemäße Verfahren zum Auslegen und/oder Umsetzen und/oder zur virtuellen Inbetriebnahme eines Antriebssystems für die Bewegung wenigstens einer Last Bahn durchgeführt werden.

Der Zugriff auf das erfindungsgemäße Entwurfs-System bzw. zumindest Teile dieses wird dabei besonders bevorzugt über eine Cloud bereitgestellt bzw. der Zugriff erfolgt besonders bevorzugt über eine Cloud. In diesem Falle kann ein Server für die Emulations-Verwaltung vorgesehen sein, der via Cloud für (auch entfernt lokalisierten) Anwender zugänglich ist. Der Server ist dann bevorzugt mit Emulationshardware für die digitale Emulation und/oder einer physischen SPS und insbesondere über diese mit einem Teststandsaufbau verbunden.

Bevorzugt ist das System ausgebildet und/oder eingerichtet, um im Rahmen der wenigstens einen Überprüfung des Steuerungsprogrammes das beschriebene mechanische System in Echtzeit zu emulieren.

Eine teilweise reale Testumgebung kann, sofern vorhanden, eine physische Test-Steuerung und ein virtuelles Test-Antriebssystem oder eine virtuelle Test-Steuerung und ein physisches Test-Antriebssystem oder eine physische Test-Steuerung und ein physisches Test-Antriebssystem umfasst. Alternativ oder zusätzlich kann eine virtuelle Testumgebung, sofern vorhanden, eine virtuelle Test-Steuerung und ein virtuelles Test-Antriebssystem umfassen.

Das System kann einen Emulationsalgorithmus für die Emulation des beschriebenen mechanischen Systems in Echtzeit umfassen und bevorzugt ausgebildet und/oder eingerichtet sein, um den Emulationsalgorithmus gemäß dem beschriebenen mechanischen System zu parametrieren.

Das erfindungsgemäße System kann, sofern ausschließlich eine Überprüfung in einer (rein) virtuellen bzw. rein digitalen Testumgebung vorgesehen ist, im einfachsten Falle durch einen oder auch mehrere Recheneinrichtungen, etwa Computer und/oder andere Hardware gegeben sein, auf dem oder denen geeignete Software bzw. Software-Sammlungen bzw. Emulationsalgorithmen installiert ist bzw. sind.

Das System kann bevorzugt Echtzeit-fähige Emulationshardware umfassen, auf der dann insbesondere ein Emulationsalgorithmus abgelegt ist. Besonders bevorzugt kann eine IRT-fähige Emulationshardware vorgesehen sein.

Sofern (auch) eine Überprüfung in einer Testumgebung mit realen Komponenten möglich sein soll, kann in Weiterbildung des erfindungsgemäßen Systems vorgesehen sein, dass das System eine physische, reale insbesondere speicherprogrammierbare Test-Steuerung und/oder einen realen Teststandsaufbau aufweist.

Das erfindungsgemäße System kann weiterhin ein Emulations-Lastsystem aufweisen, mittels dem das beschriebene mechanische System emuliert werden kann. Dann ist das System bevorzugt ausgebildet und/oder eingerichtet, um mit dem Emulations-Lastsystem ein reales Test-Antriebssystem oder zumindest wenigstens ein zu dem wenigstens einen Antriebsmotor des beschriebenen möglichen Antriebssystems baugleichen oder ähnlichen realen Test-Antriebsmotor derart zu belasten, dass die resultierende Echtzeit-Lastkurve bis auf eine zulässige Abweichung derjenigen Lastkurve entspricht, die sich ergeben würde, wenn die wenigstens eine Last mittels dem möglichen Antriebssystem gemäß der Beschreibung der Lastbewegung bewegt würde.

In weiterer vorteilhafter Ausgestaltung ist das erfindungsgemäße System ausgebildet und/oder eingerichtet, um die Definition des Anwendungsfalles (gemäß a)) und/oder die Bereitstellung der Beschreibung des möglichen Antriebssystems (gemäß b)) durch einen Anwender in einer Benutzeroberfläche entgegenzunehmen, wobei der Anwender bevorzugt den Anwendungsfall definiert und/oder das mögliche Antriebssystem beschreibt, indem er in der Benutzeroberfläche Parameter eingibt und/oder indem er aus einer Mehrzahl von ihm in der Benutzeroberfläche angebotenen Auswahlmöglichkeiten auswählt.

Auch kann das System ausgebildet und/oder eingerichtet sein, um nach der Entgegennahme von Eingaben von einem Anwender für die Definition eines Anwendungsfalles (gemäß a)) und vor der Entgegennahme von Eingaben von einem Anwender zur Beschreibung eines möglichen Antriebssystems (gemäß b)) unter Berücksichtigung des mechanischen Systems und der Lastbewegung eine resultierende Lastkurve zu berechnen.

Besonders bevorzugt ist das System weiterhin ausgebildet und/oder eingerichtet, um nach der Entgegennahme von Eingaben von einem Anwender zur Beschreibung eines möglichen Antriebssystems (gemäß b)) und vor der Übergabe des Steuerungsprogramms (gemäß c)) eine Simulation des Gesamtsystems umfassend das mechanische System und das mögliche Antriebssystem und insbesondere die Lastbewegung, durchzuführen, wobei die Simulation bevorzugt unter Verwendung eines Modells durchgeführt wird, welches Teilmodelle zumindest für das mechanische System und/oder das beschriebene mögliche Antriebssystem umfasst.

In weiterer vorteilhafter Ausgestaltung ist das System ausgebildet und/oder eingerichtet, um Daten, die im Rahmen der wenigstens einen Überprüfung des Steuerungsprogramms an der Test-Steuerung und/oder an dem Test-Antriebssystem erfasst und/oder berechnet werden bzw. wurden, einem Anwender insbesondere in Echtzeit in einer 3-D-Umgebung, welche bevorzugt das mögliche Antriebssystem und/oder mechanische System visualisiert, dargestellt werden.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung zum Ablauf einer Ausführungsform des erfindungsgemäßen Verfahrens zum Planen und/oder überprüfen eines Antriebssystems;
- FIG 2: eine rein schematische Darstellung eines Antriebssystems; und
- FIG 3: eine rein schematische Darstellung zu einer Cloud-Anbindung.

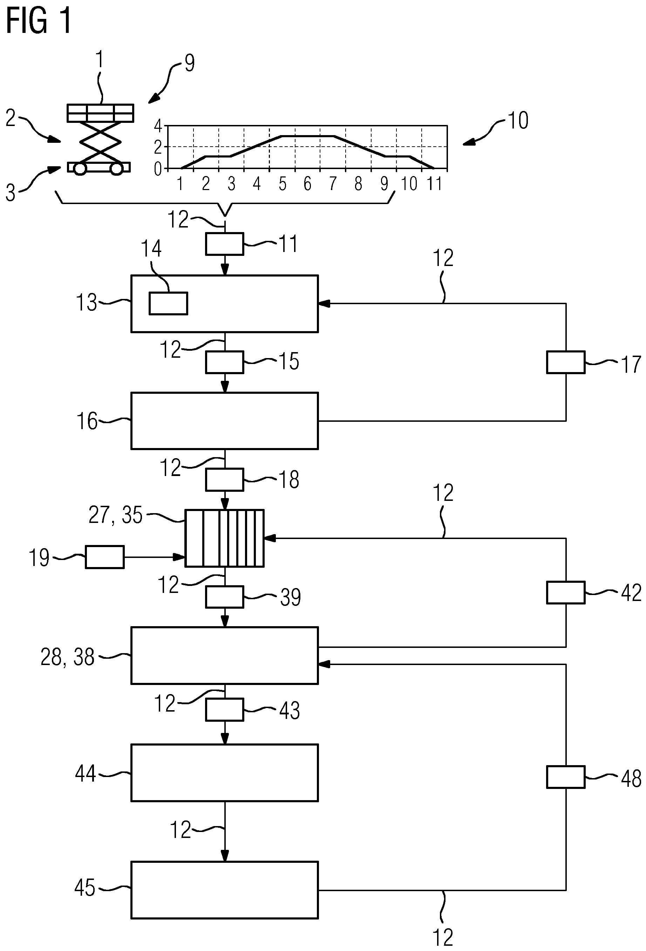

In der FIG 1 ist stark vereinfacht und rein schematisch der Ablauf eines Ausführungsbeispiels des erfindungsgemäßen Verfahrens zum Planen und/oder Überprüfen eines Antriebssystems dargestellt.

Bei dem zu planenden bzw. zu prüfenden Antriebssystem handelt es sich um ein solches, welches zum Einsatz kommt, um die Bewegung einer Last entlang einer vorgegebenen Bahn zu realisieren. Vorliegend soll konkret eine Last 1 mittels einer Hubvorrichtung 2, die Teil eines in FIG 1 nur stark vereinfacht dargestellten Hubwagens 3 ist, entlang der vorgegebenen Bahn gehoben und gesenkt werden.

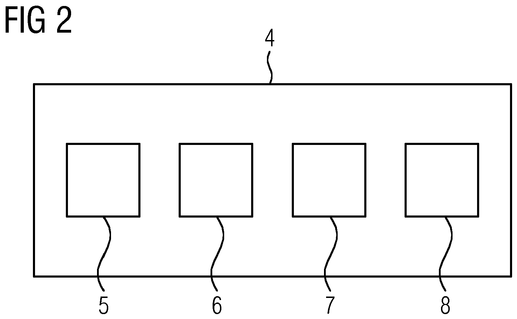

Ein Antriebssystem 4, welches rein schematisch in FIG 2 dargestellt ist, umfasst in der Regel ein Netzteil 5, eine zugehörige Antriebsmotorsteuerung 6, einen Antriebsmotor 7 und ein Getriebe 8.

Abhängig von der anwenderspezifischen Fahrkurvenvorgabe in Kombination mit dem eingesetzten mechanischen System 9, welches sich aus der Beschaffenheit der Last 1 und vorliegend der Hubvorrichtung 2 ergibt, ergeben sich für die zu verwendenden Antriebskomponenten 5, 6, 7, 8 spezielle Anforderungen.

Um eine Kombination geeigneter Antriebskomponenten 5, 6, 7, 8 zu ermitteln und zu überprüfen, ob diese und auch ein zugehöriges, seitens des Anwenders bereitzustellendes Steuerungsprogramm für den konkreten Anwendungsfall geeignet sind, wird das Ausführungsbeispiel des erfindungsgemäßen Verfahrens durchgeführt.

Konkret wird dabei in einem ersten Schritt a) innerhalb der Benutzeroberfläche einer geeigneten Software von dem Anwender das mechanische Modell 9 genau beschrieben.

Im Rahmen des hier beschriebenen Ausführungsbeispiels stehen dem Anwender für die Definition des Anwendungsfalls in der Benutzeroberfläche Auswahlmöglichkeiten zur Verfügung, welche häufig vorkommende Anwendungsfälle, wie etwa eine klassische Hubvorrichtung, abdecken. Zum anderen können in der Benutzeroberfläche spezifische Anwendungsfälle durch Eingabe einer detaillierten Beschreibung definiert werden. Vorliegend wird von dem Anwender der Anwendungsfall der klassischen Hubvorrichtung gewählt und die Last 1 beschrieben.

Weiterhin ist vom Anwender das Bewegungsprofil zu beschreiben bzw. anzugeben. Dies erfolgt vorliegend durch Angabe einer Fahrkurve 10, die rein schematisch in der FIG 1 dargestellt ist. In dieser ist auf der Y-Achse die Geschwindigkeit dargestellt und auf der X-Achse der Weg und/oder die Zeit, konkret abschnittsweise die Zeit und abschnittsweise der Weg.

Die Fahrkurve 10 kann insbesondere wie folgt beschrieben werden:
1: Y = Geschwindigkeit, X = Zeit
2: Y = Geschwindigkeit, X = Weg
3: Y = Beschleunigung, X = Zeit
4: Y = Beschleunigung, X = Weg
5: Y = Weg, X = Zeit

In der FIG 1 ist die Eingabe der Information über das mechanische System 9 und das Bewegungsprofil in die Software durch ein diese Informationen repräsentierendes Blockelement 11 neben einem Pfeil 12, der zu einem mit dem Bezugszeichen 13 versehenen, die Software darstellenden Blockbildelement weist, angedeutet.

In einem nächsten Schritt a1) wird anhand der physikalischen Eigenschaften des beschriebenen mechanischen Systems 9 bzw. Modells, einschließlich der beschrieben Last 1, sowie der verwendeten Fahrkurve 10 von der Software 13 automatisch eine Lastkurve an einer Motorwelle berechnet, und auf Basis der berechneten Lastkurve wird aus einer Gruppe von insgesamt zur Verfügung stehenden Antriebskomponenten eine Liste von Antriebskomponenten vorausgewählt, welche für die konkrete Anwendung prinzipiell geeignet sind.

In einem nächsten Schritt b) wird von dem Anwender in der Benutzeroberfläche die Beschreibung eines möglichen Antriebssystems 14 bereitgestellt, welche die Angabe eines Netzteils 5, einer Antriebsmotorsteuerung 6, eines Antriebsmotors 7 und eines Getriebes 8 umfasst. Dabei sind konkrete Typen für diese Komponenten angegeben. Die Beschreibung des möglichen Antriebssystems 14 wird vorliegend von dem Anwender bereitgestellt, indem er eine Auswahl aus denjenigen Antriebskomponenten trifft, die ihm innerhalb der Benutzeroberfläche der Software 13 angeboten werden.

Es sei angemerkt, dass die Vorauswahl von Komponenten gemäß Schritt a1) bevorzugt, jedoch nicht zwingend erforderlich ist.

In einem anschließenden Schritt b1) erfolgt eine Simulation des Gesamtsystems, welche das mechanische System 9, das mögliche Antriebssystem 14 und die Fahrkurve 10 einschließt bzw. berücksichtigt. Die Übergabe der Informationen über das mechanische System 9, das Bewegungsprofil 10 und die Antriebskomponenten an die Simulation ist in der FIG 1 durch das mit dem Bezugszeichen 15 versehenes, die Informationen repräsentierende Blockbildelement neben einem Pfeil 12 angedeutet, welcher von der Software 13 auf ein die Simulation repräsentierendes, mit dem Bezugszeichen 16 versehenes Element weist.

Vorliegend wird die Simulation 16 unter Verwendung eines Modells durchgeführt, welches Teilmodelle für das mechanische System 9 und das beschriebene mögliche Antriebssystem 14 umfasst.

Auf Basis des Ergebnisses der im Schritt b1) durchgeführten Simulation wird anschließend eine Entscheidung getroffen, ob das in Schritt b) beschriebene mögliche Antriebssystem 14 für den Anwendungsfall geeignet ist oder nicht, und für den Fall, dass es nicht geeignet ist, werden die Komponenten abgelehnt und es wird zu Schritt b) zurückgekehrt. Die Ablehnung von Komponenten ist in der FIG 1 durch ein mit dem Bezugszeichen 17 versehenes Element neben einem Pfeil 12, welcher von der Simulation 16 zu der Software 13 zurückweist, dargestellt.

Werden Komponenten abgelehnt, wird der Schritt b) erneut durchgeführt, wobei nun eine Beschreibung eines anderen möglichen Antriebsystems (in der Figur nicht dargestellt), welches sich durch einen anderen Antriebsmotor und/oder ein anderes Netzteil und/oder ein anderes Getriebe und/oder eine andere Antriebsmotorsteuerung auszeichnet, vom Anwender - erneut durch Auswahl in der Benutzeroberfläche der Software 13 - bereitgestellt wird.

Für den Fall, dass die Komponenten - direkt oder nach erneuter Auswahl und Simulation - angenommen werden, geht es zum nächsten Schritt. Die Annahme der Komponenten ist in der FIG 1 durch ein mit dem Bezugszeichen 18 versehenes Element angedeutet.

Antriebsmotoren 7 werden in der Regel über eine übergeordnete Steuerung angesteuert. Konkret kann vorgesehen sein, dass eine einem Antriebsmotor 7 zugeordnete Antriebsmotorsteuerung 6 ihre Fahrkurvenvorgabe von einer SPS erhält, welche als die übergeordnete Steuerung fungiert. Dann ist die zuvor angelegt Fahrkurve 10, die ein Anwender realisieren möchte, von diesem insbesondere in einem Anwender-Steuerungsprogramm auf einer SPS zu implementieren.

In einem Schritt c) wird von dem Anwender ein solches Steuerungsprogramm 19 für eine mit dem beschriebenen möglichen Antriebssystem 14 zu verbindende oder verbindbare insbesondere speicherprogrammierbare Steuerung bereitgestellt. Die SPS, die der Anwender nutzen wird, ist dabei in den Figuren nicht dargestellt. Diese muss auch noch nicht bei diesem vorhanden sein. Das Steuerungsprogramm 19 umfasst in an sich bekannter Weise Steuerbefehle für den Antriebsmotor 7 bzw. eine zugehörige Antriebsmotorsteuerung 6 des mögliche Antriebssystems 14, die, wenn sie ausgeführt werden, eine Bewegung der Last 1 entlang der vorgegebenen Bahn bedingen (würden) bzw. sollen.

Um die ordnungsgemäße Funktion eines Steuerungsprogrammes, konkret SPS-Anwenderprogrammes 19 in Verbindung mit den gewählten Antriebskomponenten 5, 6, 7, 8 des möglichen Antriebssystems 14 zu evaluieren, sind erfindungsgemäß Funktionstests vorgesehen. Konkret erfolgt in einem Schritt d) eine Überprüfung des bereitgestellten Steuerungsprogrammes 19, wobei sowohl eine Überprüfung unter Verwendung einer zumindest teilweise physischen, realen Testumgebung 20, als auch eine Überprüfung in einer rein digitalen, virtuellen Testumgebung 21 erfolgt.

Die Bereitstellung der Möglichkeit einer Echtzeit-fähigen Überprüfung in (teilweise) realen und/oder digitalen Testumgebung(en) (20, 21) macht es möglich, dass eine Evaluierung erfolgen kann, ohne dass ein Aufbau des Kunden durch das Auftreten möglicher Fehlfunktionen bei der Programmevaluierung beschädigt wird bzw., dass die Entwicklung und Überprüfung eines Anwender-Steuerungsprogrammes 19 auch vorab noch ohne das Vorhandensein entsprechender Antriebskomponenten 5, 6, 7, 8 erfolgen kann. Anhand von Daten, die bei der Überprüfung bzw. den Überprüfungen ermittelt bzw. berechnet werden, kann die ordnungsgemäße Funktion des Anwender-Steuerungsprogramms 19 in Verbindung mit den eingesetzten Antriebskomponenten überprüft werden.

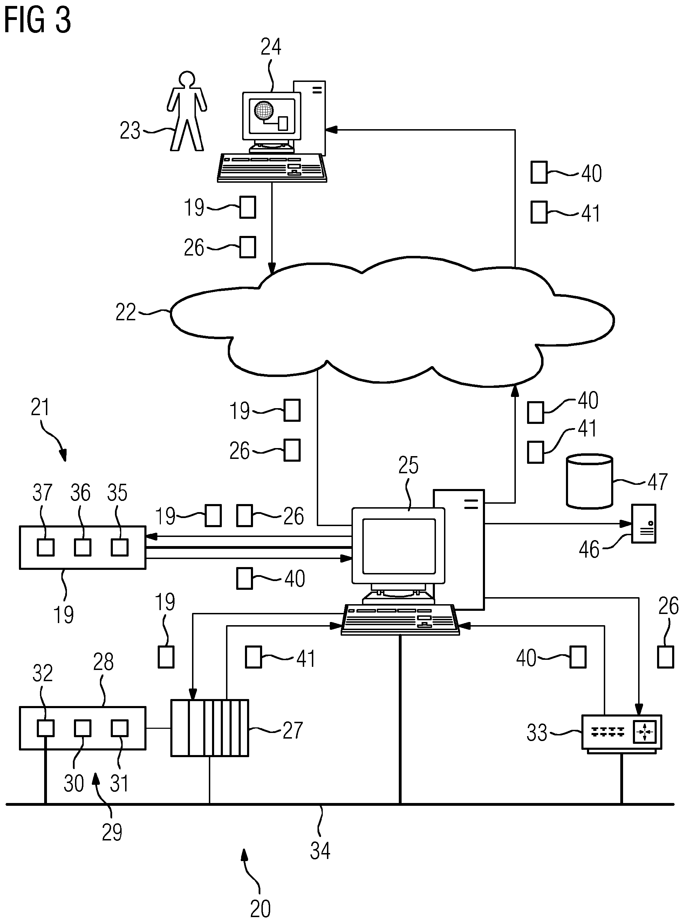

Sowohl der Zugriff auf die teilweise reale Testumgebung 20 als auch auf die rein virtuelle Testumgebung 21 erfolgt vorliegend über eine Cloud 22, was in FIG 3 rein schematisch dargestellt ist.

In dieser Figur ist - vereinfacht - der Anwender 23 neben einem Computer 24 gezeigt. Auf dem Computer 24 kann der Anwender 23 das Steuerungsprogramm 19 erstellen bzw. speichern und es über die Cloud 22 an einen bereitstehenden Emulations-Verwaltungsserver 25 übermitteln. Zusammen mit dem Steuerungsprogramm 19 wird die Systemmodellierung 26 umfassend das mechanische System 9, die Fahrkurve 10, und das beschriebene mögliche Antriebssystem 14 weitergegeben.

Es sei angemerkt, dass im Rahmen des hier beschriebenen Ausführungsbeispiels zwei Möglichkeiten, konkret die Durchführung einer Überprüfung in einer zumindest teilweise realen Testumgebung 20 und in einer rein virtuellen Testumgebung 21 zur Verfügung stehen und es werden im Folgenden beide Möglichkeiten näher beschrieben. Es versteht sich jedoch, dass es prinzipiell auch ausreichen kann, entweder nur eine (teilweise) reale Testumgebung 20 oder nur eine rein virtuelle Testumgebung 21 zu nutzen, um das Steuerungsprogramm 19 zusammen mit den Komponenten 5, 6, 7, 8 eines möglichen Antriebssystems 14 zu evaluieren.

Für die Überprüfung in der teilweise realen Testumgebung 20 wird das vom Anwender erstellte Steuerungsprogramm 19 an eine bereitgestellte, physische speicherprogrammierbare Test-Steuerung 27 (vgl. FIG 3) übergeben, die mit einem realen Teststandsaufbau 28 für das beschriebene mögliche Antriebssystem 14 verbunden ist, und für die der Teststandsaufbau 28 von der physischen Test-SPS 27 gemäß dem Steuerungsprogramm 19 in Echtzeit angesteuert wird. Bei der physischen Test-SPS 27 handelt es sich vorliegend um das Modell SIMATIC S7 1200/1500 aus dem Hause der Anmelderin, wobei dies rein beispielhaft und nicht einschränkend zu verstehen ist.

Für die Überprüfung in der teilweise realen Testumgebung 20 wird dabei ein zu dem Teststandsaufbau 28 gehöriges Test-Antriebssystem 29 bzw. ein Test-Antriebsmotor 30 eines solchen, welcher zu dem Antriebsmotor 7 gemäß der in Schritt b) bereitgestellten Beschreibung des möglichen Antriebssystems 14 baugleich - oder zumindest ähnlich ist - ist, also quasi einen "realen Zwilling" darstellt, und der Befehle von einer Test-Antriebsmotorsteuerung 31 des Test-Antriebssystems 29 erhält, die wiederum von der physischen Test-SPS 27 angesteuert wird, mit einem Emulations-Lastsystem belastet. Das Emulations-Lastsystem umfasst einen Emulationsmotor 32 und IRT-fähige Emulationshardware 33, und die Belastung ist derart, dass die resultierende Echtzeit-Lastkurve (ggf. bis auf eine zulässige Abweichung) derjenigen Lastkurve entspricht, die sich ergeben würde, wenn die wenigstens eine Last 1 mittels dem in Schritt b) beschriebenen möglichen Antriebssystem 14 gemäß der in Schritt a) beschriebenen Lastbewegung bewegt würde. Mit dem Emulations-Lastsystem wird das mechanische System 9 in Echtzeit emuliert.

Der Test-Antriebsmotor 30 und die zugehörige Test-Antriebsmotorsteuerung 31 sind gemäß der Systemmodellierung 26, konkret der Beschreibung des möglichen Antriebssystems 14 gewählt worden. Es sei angemerkt, dass das Test-Antriebssystem 29 weitere in der FIG 3 nicht dargestellte Komponenten, etwa wenigstens ein Test-Netzteil und/oder wenigstens ein Test-Getriebe umfasst bzw. umfassen kann, die entsprechenden Komponenten des beschriebenen, möglichen Antriebssystems (14) gleichen oder zumindest ähneln.

Der Emulationshardware 33 wird, damit diese den Emulationsmotor 32 entsprechend dem mechanischen System 9 ansteuern kann, die Systemmodellierung 26, umfassend die Beschreibung des mechanischen Systems 9 und die Fahrkurve 10, zuvor übergeben bzw. ist zuvor übergeben worden.

Der Emulations-Verwaltungsserver 25 ist sowohl mit der realen Test-SPS 27 verbunden, die wiederum mit dem realen Teststandsaufbau 28 verbunden ist, als auch mit der Emulationshardware 33. Die Verbindung zwischen dem Emulations-Verwaltungsserver 25 und der realen Test-SPS 27 bzw. der Emulations-Hardware 33 ist dabei über ein PROFINET Netzwerk 34 gegeben. Es sei angemerkt, dass bei diesem Aufbau prinzipiell auch das Test-Antriebssystem 29 rein digital bzw. virtuell zur Verfügung gestellt werden könnte, konkret auf der Emulationshardware 33. Auf den Teststandsaufbau 28 samt Emulationsmotor 32 könnte in diesem Fall verzichtet werden.

Für die Überprüfung in der rein virtuellen Testumgebung 21 wird das Steuerungsprogramm 19 ferner an eine virtuelle SPS 35 (auch als SoftSPS bezeichnet) übergeben, die mit einem digitalen Zwilling 36 des möglichen Antriebssystem 14 und einem digitalen Zwilling 37 des daran gekoppelten, in Schritt a) beschriebenen mechanischen Systems 9 verbunden ist, und für die der digitale Zwilling 36 des beschriebenen möglichen Antriebssystems 14 von der virtuellen SPS 35 gemäß dem Steuerungsprogramm 19 in Echtzeit angesteuert wird. Die digitalen Zwillinge 35, 36 von möglichem Antriebssystem 14 und des daran gekoppelten mechanischen Systems 9 bildet dabei alle enthaltenen Teilkomponenten ab.

Zwischen der physischen SPS 27 und dem Teststandsaufbau 28, insbesondere der Test-Antriebsmotorsteuerung 31, werden vorliegend Bewegungsdaten in Echtzeit ausgetauscht.

Die SoftSPS 35 und digitalen Zwillinge 36, 37 des möglichen Antriebssystems 14 und mechanischen Systems 9 stehen vorliegend auf einer Echtzeit-fähigen, insbesondere IRT-fähigen Emulations-Hardware bereit, die in den Figuren nicht weiter dargestellt ist.

Es sei angemerkt, dass in der rein digitalen bzw. virtuellen Testumgebung 21 das mögliche Antriebssystem 14 - in Abweichung zur teilweise realen Testumgebung 20 - ebenfalls emuliert wird. In der teilweise realen Testumgebung 20 wird nur das mechanische System 9 mittels des Emulationsmotors 32 und der Emulationshardware 33 emuliert, da ein Antriebssystem in Form des Test-Antriebssystems 29 real vorhanden ist.

Für die Überprüfung in der digitalen Testumgebung 21 übergibt der Emulations-Verwaltungsserver 25 die Systemmodellierung 26 und das Steuerungsprogramm 19 an die Emulations-Hardware. Dabei wird das Steuerungsprogramm 19 auf die virtuelle SPS 35 geladen und diese tauscht Daten mit der emulierten Antriebsmotorsteuerung des digitalen Zwillings 36 des Antriebssystems in Echtzeit aus, dies bevorzugt über die gleiche Schnittstelle, wie sie auch auf realen Geräten verfügbar wäre (beispielsweise PROFInet).

Für die teilweise reale Testumgebung 20 gilt, dass die SPS 27 basierend auf dem Steuerungsprogramm 19 Sollwertvorgaben, z.B. Soll-Geschwindigkeiten, an das Test-Antriebssystem 29 bzw. die Test-Antriebsmotorsteuerung 31 dieses in Echtzeit übergibt und Ist-Werte, etwa Ist-Geschwindigkeiten, zurück erhält. Basierend auf zurückgelieferten Ist-Werte in Verbindung mit der im Steuerungsprogramm 19 hinterlegten Fahrkurvenvorgabe, sendet die physische Test-SPS 27 dann eine resultierende Soll-Vorgabe. Es entsteht ein zyklischer Austausch von Soll- und Ist-Daten.

In der FIG 1 sind die Emulation 38, die in der rein virtuellen Testumgebung 21 eine Emulation 36, 37 sowohl des möglichen Antriebssystem 14 als auch des mechanischen Systems 9 umfasst, bzw. - für den Fall der teilweise realen Testumgebung - den Teststandsaufbau 28, vereinfacht als Blockelement dargestellt. Der Austausch von Daten, insbesondere Bewegdaten (Fahrkurve) in Echtzeit zwischen der virtuellen Test-SPS 35 und der Emulation 38 bzw. der physischen Test-SPS 27 und dem Test-Antriebssystem 29 des Teststandsaufbau 28 ist in der Figur 1 durch ein Blockbildelement mit dem Bezugszeichen 39 dargestellt.

Es sei angemerkt, dass für den Fall, dass eine teilweise reale Testumgebung 20 genutzt wird, bei der nur die Test-Steuerung 27 physisch vorliegt, und das Test-Antriebssystem 29 und das mechanische System 9 emuliert werden, insbesondere auf IRT-fähiger Emulationshardware, und somit auf den Teststandsaufbau 28 verzichtet wird bzw. werden kann, die physische Test-Steuerung 27 in Echtzeit Sollwertvorgaben, z.B. Soll-Geschwindigkeiten, an die entsprechende Emulation übergeben würde. Die Emulation würde dann den Ist-Zustand, beispielsweise Ist-Geschwindigkeiten an die physische Test-Steuerung zurückliefern. Basierend auf der von der Emulation zurückgelieferten Ist-Geschwindigkeit in Verbindung mit der im Steuerungsprogramm 19 hinterlegten Fahrkurvenvorgabe, sendet die physische Test-Steuerung dann eine resultierende Soll-Vorgabe an die Emulation. Auch hier würde ein zyklischer Austausch von Soll- und Ist-Daten entstehen. In einem solchen Szenario könnte als teilweise reale Testumgebung beispielswiese diejenige aus FIG 3 jedoch ohne den Teststandsaufbau 28 zum Einsatz kommen. Die Emulationshardware 33 würde dann entsprechend keinen Emulationsmotor 32 steuern, sondern auf dieser würde das mögliche Antriebssystem 14 und das mechanische System 9 in Echtzeit emuliert.

Um die vorliegend via Cloud 22 angebundenen Emulationen zu starten, werden die Systemmodellierung 26 sowie das zu testende Steuerungsprogramm 19 in die Cloud 22 geladen (siehe FIG 3). Anschließend werden Systemmodellierung 26 und Steuerungsprogramm 19 an den Emulations-Verwaltungsserver 25 weitergeleitet. Dieser fungiert bevorzugt als IO-Supervisor und führt eine Engineering Plattform, beispielsweise das TIA-Portal der Siemens AG aus.

Nach Erhalt des Steuerungsprogrammes 19 kann dieses automatisiert in der aktuellen Anlagenprojektierung in der Engineering Plattform, insbesondere dem TIA-Portal, eingebunden und auf den IO-Controller geladen werden. In der Umgebung des TIA-Portals beispielsweise könnte hierfür das Add on Paket "TIA Portal Openness" genutzt werden. Über dieses Add on wird eine offene Schnittstelle für das Engineering mit dem TIA-Portal bereitgestellt, wodurch es möglich wird, das TIA-Portal über externe Programme zu steuern. Somit lässt sich eine entsprechende Automatisierung problemlos realisieren.

Weiterhin erfolgt neben der Aktualisierung der Anlagenprojektierung die Parametrierung des Berechnungsalgorithmus der Emulationshardware nach den Vorgaben der erhaltenen Systemmodellierung 26, damit der definierte Anwendungsfall und das beschriebene mögliche Antriebssystem 14 abgebildet werden. Dies gilt vorliegend sowohl für die Emulationshardware 33 der teilweise realen Testumgebung 20 für die Emulation nur des mechanischen Systems 9, als auch die Emulationshardware, auf welcher die virtuelle Testumgebung 21 läuft, und in welcher sowohl das mögliche Antriebssystem 14 als auch das mechanische System 9 emuliert wird. Dann kann die Emulation gestartet werden.

Insbesondere über eine Benutzeroberfläche in der Cloud-Anwendung können im Steuerungsprogramm 19 hinterlegte Variablen nach Wunsch gesetzt werden.

Daten, die während der Überprüfung in der teilweise realen und der virtuellen Testumgebung 20, 21 erfasst und/oder berechnet werden, insbesondere Emulationsdaten 40 und Statusinformationen 41, werden vorliegend über den Emulationsverwaltungsserver 25 an den Anwender 23 über die Cloud 22 zurückgegeben. Es können beispielswiese emulierte Ist-Werte, insbesondere Positions- und/oder Geschwindigkeitswerte, die aus dem virtuellen Test-Antriebssystem zurückgegeben werden, ausgegeben werden. Anhand dieser kann - insbesondere im Falle eines Antriebssystems mit mehr als einem Antriebsmotor bzw. mehreren Achsen - erkannt werden, ob es zu Kollisionen kommt. Bevorzugt erfolgt auch eine Aufbereitung der Daten in der Cloud-Anwendung.

Emulationsdaten 40 werden dabei sowohl von der Emulationshardware der virtuellen Testumgebung 21 als auch der Emulationshardware 33 der teilweise realen Testumgebung 20 an den Emulations-Verwaltungsserver 25 und von diesem über die Cloud 22 an den Rechner 24 weitergegeben, wo sich der Anwender 23 diese auf einem Bildschirm ansehen und sie ggf. weiterverarbeiten kann. Die Darstellung von Emulationsdaten kann dabei zum Beispiel in Tabellen und/oder Diagrammen erfolgen.

Bei Daten, die während der Überprüfung in der teilweise realen und der rein virtuellen Testumgebung 20, 21 erfasst bzw. berechnet werden, kann es sich beispielsweise um Größen wie den (berechneten) Geschwindigkeits- oder Positionsverlauf der Mechanik handeln.

Über den Emulationsverwaltungsserver 25 können dem Anwender 23 weiterhin Statusinformationen 41, die von bzw. aus der realen Testumgebung 20, insbesondere von der realen Test-SPS 27 stammen, zurückgegeben werden. Diese können ebenfalls resultierende Ist-Werte, insbesondere Positions- und/oder Geschwindigkeitswerte, die aus dem realen Test-Antriebssystem zurückgegeben werden, umfassen. Anhand dieser kann - insbesondere im Falle eines Antriebssystems mit mehr als einem Antriebsmotor bzw. mehreren Achsen - erkannt werden, ob es zu Kollisionen kommt.

In einem Schritt d) erfolgt anhand der während der Überprüfungen und den Emulation(en) erfassten bzw. berechneten Daten 40, 41 eine Beurteilung der Geeignetheit des Steuerungsprogrammes 19 und/oder des möglichen Antriebssystems 14. Konkret wird vorliegend anhand erfasster bzw. berechneter Größen, die beispielsweise durch den Geschwindigkeits- oder Positionsverlauf der Mechanik gegeben sein können, die ordnungsgemäße Funktion des Anwender-Steuerungsprogrammes 19 in Verbindung mit den eingesetzten Antriebskomponenten 5, 6, 7, 8 des möglichen Antriebssystems 14 überprüft.

Bevorzugt werden erfasste bzw. berechnete Daten 40, 41 einem Anwender 23 insbesondere in Echtzeit in einer 3-D-Umgebung, welche bevorzugt das mögliche Antriebssystem 14 und/oder das mechanische System 9 visualisiert, dargestellt. Die Darstellung kann in einem geeigneten 3-D-Visulaisierungstool erfolgen. Dabei kann einem Anwender 23 der komplette Bewegungsablauf gemäß dem zu testenden Steuerungsprogramm 19 in 3D dargestellt werden.

Insbesondere für den Fall, dass das Steuerungsprogramm 19 der Steuerung eines möglichen Antriebssystems 14 mit zwei oder mehr Antriebsmotoren 7 dienen soll, kann dabei auch eine gezielte Überprüfung erfolgen, ob es zu Kollisionen kommt.

Sofern die Überprüfung bzw. Beurteilung negativ ist, wird zum vorangegangen Schritt d) zurückgekehrt. In der FIG 1 ist dies durch einen von der Emulation 38 zur (physischen bzw. realen) Test-SPS 27, 35 zurückweisenden Pfeil 12 und ein mit dem Bezugszeichen 42 versehenes Element, welches das Ergebnis "Evaluierung fehlgeschlagen" repräsentiert, dargestellt.

Fällt hingegen die Evaluierung positiv aus (Bezugszeichen 43), kann in einem Schritt e) das Gesamtsystem aufgebaut werden (Bezugszeichen 44) und in Betrieb genommen werden (Bezugszeichen 45), wobei die dem Anwender 23 bereitgestellte Steuerungssoftware 19 für die Steuerung zum Einsatz kommt.

Es kann vorgesehen sein, dass im Rahmen der Cloud-Anwendung Statistiken über Anwendungsfälle geführt werden, insbesondere, um Antriebssystemkomponenten kontinuierlich zu optimieren. Hierfür kann eine insbesondere mit dem Emulations-Verwaltungsserver 25 verbundene Einrichtung 46 vorgesehen sein, auf welcher eine Datenbank 47 geführt wird, in der statische Daten hinterlegt werden.

Weiterhin bevorzugt kann vorgesehen sein, dass im Anschluss an den Aufbau des Gesamtsystems und die Inbetriebsetzung 45 dieses eine Validierung bzw. Verifikation in der realen Anwendungsumgebung erfolgt, wobei insbesondere überprüft wird, ob die Steuerungssoftware 19 zusammen mit den installierten Antriebskomponenten 5, 6, 7, 8 tatsächlich fehlerfrei funktioniert. Sollte eine solche Überprüfung ergeben, dass das Ergebnis nicht ganz einwandfrei ist, kann eine Anpassung der digitalen und/oder realen Emulation erfolgen. Die ist in FIG 1 durch ein Blockbildelement 48 neben einem von der Inbetriebsetzung 45 zu Emulation 38 zurückweisenden Pfeil 12 dargestellt.

Es sei angemerkt dass ein Ausführungsbeispiel eines erfindungsgemäßen Systems zumindest den Emulations-Verwaltungsserver 25, die physische Test-SPS 27, den Teststandsaufbau 28, die Emulations-Hardware 33 der teilweise realen Testumgebung 20 und die Emulationshardware der virtuellen Testumgebung 21 mit jeweils darauf befindlichem Emulationsalgorithmus umfassen bzw. durch diese Komponenten gegeben sein kann.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielswiese wurde im Rahmen des vorstehend beschriebenen Ausführungsbeispiels eine Antriebskonfiguration geplant und ein Steuerungsprogramm 19 im Vorfeld, noch bevor der eigentliche Aufbau erfolgte, überprüft. Alternativ oder zusätzlich ist es auch möglich, unter Durchführung des erfindungsgemäßen Verfahrens zu prüfen, ob eine bereits bestehende Antriebskonfiguration einschließlich Steuerungssoftware für einen neuen Anwendungsfall geeignet ist.

## Patentansprüche

1. Verfahren zum Auslegen und/oder Umsetzen und/oder zur virtuellen Inbetriebnahme eines Antriebssystems (4) für die Bewegung wenigstens einer Last (1),
bei dem
a) ein Anwendungsfall definiert wird, wobei die Definition des Anwendungsfalls zumindest eine Beschreibung eines mechanischen Systems (9) für die Lastbewegung und der Lastbewegung, insbesondere in Form einer Fahrkurve (10), umfasst,
b) unter Berücksichtigung des Anwendungsfalles eine Beschreibung eines möglichen Antriebssystems (14) bereitgestellt wird, welche die Angabe wenigstens eines Antriebsmotors (7) umfasst,
c) ein Steuerungsprogramm (19) für eine mit dem möglichen Antriebssystem (14) zu verbindende oder verbindbare Steuerung bereitgestellt wird, wobei das Steuerungsprogramm (19) Steuerbefehle für das mögliche Antriebssystem (14) umfasst,
d) wenigstens eine Überprüfung des Steuerungsprogrammes (19) erfolgt, für die das Steuerungsprogramm (19) an eine Test-Steuerung (27, 35) übergeben wird, die mit einem Test-Antriebssystem (29, 36) für das mögliche Antriebssystem (14) verbunden ist, und für die das Test-Antriebssystem (29, 36) von der Test-Steuerung (27, 35) gemäß dem Steuerungsprogramm (19) in Echtzeit angesteuert wird, wobei
eine Überprüfung des Steuerungsprogramms (19) in einer zumindest teilweise realen Testumgebung (20) erfolgt, wobei während der Ansteuerung des Test-Antriebssystems (29, 36) durch die Test-Steuerung (27, 35) Daten an der Test-Steuerung (27, 35) und/oder an dem Test-Antriebssystem (29, 36) erfasst und/oder berechnet werden,
und/oder eine Überprüfung des Steuerungsprogramms (19) in einer virtuellen Testumgebung (21) erfolgt, wobei während der Ansteuerung des Test-Antriebssystems (36) durch die Test-Steuerung (35) Daten an der Test-Steuerung (35) und/oder an dem Test-Antriebssystem (36) erfasst und/oder berechnet werden, und
e) anhand der erfassten und/oder berechneten Daten eine Beurteilung der Geeignetheit des Steuerungsprogrammes (19) und/oder des möglichen Antriebssystems (14) für den Anwendungsfall erfolgt.

2. Verfahren nach Anspruch 1,
**dadurch gekennzeichnet, dass**
sofern die Beurteilung des Steuerungsprogrammes (19) und/oder des möglichen Antriebssystems (14) in Schritt e) positiv ausfällt, in einem Schritt f) das mögliche Antriebssystem (14) installiert und in Betrieb genommen wird.

3. Verfahren nach Anspruch 2,
**dadurch gekennzeichnet, dass**
im Anschluss an den Aufbau in einem Schritt g) eine Validierung erfolgt, wobei überprüft wird, ob das Steuerungsprogramm (19) zusammen mit dem installierten Antriebssystem fehlerfrei funktioniert, und insbesondere für den Fall, dass dem nicht so ist, eine Anpassung der zumindest teilweise realen Testumgebung (20) und/oder der virtuellen Testumgebung (21), insbesondere eines Emulationsalgorithmus für das in Schritt a) beschriebene mechanische System (9) und/oder eines Emulationsalgorithmus für das in Schritt b) beschriebene mögliche Antriebssystem (14) dieser, erfolgt.

4. Verfahren nach einem der vorhergehenden Ansprüche,
**dadurch gekennzeichnet, dass**
der Zugriff auf die zumindest teilweise reale Testumgebung (20) und/oder der Zugriff auf die virtuelle Testumgebung (21), insbesondere der Zugriff auf die Test-Steuerung (27, 35) dieser über eine Cloud (22) bereitgestellt wird und insbesondere erfolgt.

5. Verfahren nach einem der vorhergehenden Ansprüche,
**dadurch gekennzeichnet, dass**
im Rahmen der wenigstens einen Überprüfung des Steuerungsprogramms (19) der Datenaustausch zwischen der Test-Steuerung (27, 35) und dem Test-Antriebssystem (29, 36) über ein Echtzeit-Kommunikationsprotokoll, insbesondere PROFINET oder Ethernet oder PROFIDRIVE oder EtherCAT, erfolgt.

6. Verfahren nach einem der vorhergehenden Ansprüche,
**dadurch gekennzeichnet, dass**
im Rahmen der wenigstens einen Überprüfung des Steuerungsprogrammes (19) in Schritt d) das in Schritt a) beschriebene mechanische System (9) in Echtzeit emuliert wird.

7. Verfahren nach Anspruch 6,
**dadurch gekennzeichnet, dass**
das beschriebene mechanische System (9) unter Verwendung eines Emulationsalgorithmus in Echtzeit emuliert wird, wobei der Emulationsalgorithmus bevorzugt gemäß der Beschreibung des mechanischen Systems (9) aus Schritt a) parametriert wird.

8. Verfahren nach Anspruch 6 oder 7,
**dadurch gekennzeichnet, dass**
das beschriebene mechanische System (9) durch ein Emulations-Lastsystem (32, 32) emuliert wird, wobei bevorzugt mit dem Emulations-Lastsystem (32, 33) ein reales Test-Antriebssystem (29) oder zumindest wenigstens ein zu dem wenigstens einen Antriebsmotor (7) des beschriebenen Antriebssystems (14) baugleicher oder ähnlicher realer Test-Antriebsmotor (230) derart belastet wird, dass die resultierende Echtzeit-Lastkurve bis auf eine zulässige Abweichung derjenigen Lastkurve entspricht, die sich ergeben würde, wenn die wenigstens eine Last (1) mittels dem möglichen Antriebssystem (14) gemäß der Beschreibung der Lastbewegung bewegt würde.

9. Verfahren nach einem der vorhergehenden Ansprüche,
**dadurch gekennzeichnet, dass**
die Definition des Anwendungsfalles gemäß Schritt a) und/oder die Bereitstellung der Beschreibung des möglichen Antriebssystems (14) gemäß Schritt b) durch einen Anwender (23) in der Benutzeroberfläche eines geeigneten Programmes erfolgt, wobei der Anwender (23) bevorzugt den Anwendungsfall definiert und/oder das mögliche Antriebssystem (14) beschreibt, indem er in der Benutzeroberfläche Parameter eingibt und/oder indem er aus einer Mehrzahl von ihm in der Benutzeroberfläche angebotenen Auswahlmöglichkeiten auswählt.

10. Verfahren nach einem der vorhergehenden Ansprüche,
**dadurch gekennzeichnet, dass**
nach Schritt a) und vor Schritt b) in einem Schritt a1) unter Berücksichtigung des mechanischen Systems (9) und der Lastbewegung eine resultierende Lastkurve berechnet wird.

11. Verfahren nach einem der vorhergehenden Ansprüche,
**dadurch gekennzeichnet, dass**
nach Schritt b) und vor Schritt c) in einem Schritt b1) eine Simulation (16) des Gesamtsystems bevorzugt umfassend das mechanische System (9) und das mögliche Antriebssystem (14) und insbesondere die Lastbewegung, erfolgt, wobei die Simulation (16) bevorzugt unter Verwendung eines Modells durchgeführt wird, welches Teilmodelle zumindest für das mechanische System (9) und/oder das mögliche Antriebssystem (14) umfasst.

12. Verfahren nach Anspruch 11,
**dadurch gekennzeichnet, dass**
auf Basis der Ergebnisses der in Schritt b1) durchgeführten Simulation (16) eine Entscheidung getroffen wird, ob das in Schritt b) beschriebene mögliche Antriebssystem (14) für den in Schritt a) definierten Anwendungsfall geeignet ist oder nicht, und für den Fall, dass es nicht geeignet ist, zu Schritt b) zurückgekehrt wird, wobei eine Beschreibung eines anderen möglichen Antriebssystems, welches sich durch wenigstens eine andere Komponente auszeichnet, bereitgestellt wird.

13. Verfahren nach einem der vorhergehenden Ansprüche,
**dadurch gekennzeichnet, dass**
in Schritt b) die Beschreibung eines bereits installierten und insbesondere im Betrieb gewesenen Antriebssystems, dessen Eignung für einen neuen Anwendungsfall überprüft werden soll, als Beschreibung eines möglichen Antriebssystems 1(4) bereitgestellt wird, oder in Schritt b) die Beschreibung eines zu planenden, noch nicht installierten Antriebssystems als Beschreibung eines möglichen Antriebssystems (14) bereitgestellt wird.

14. Verfahren nach einem der vorhergehenden Ansprüche,
**dadurch gekennzeichnet, dass**
das in Schritt a) beschriebene mechanische System (9) ein nichtlineares Lastsystem umfasst oder durch ein solches gebildet ist.

15. Verfahren nach einem der vorhergehenden Ansprüche,
**dadurch gekennzeichnet, dass**
in Schritt b) die Beschreibung eines möglichen Antriebssystems (14) bereitgestellt wird, welches mehrere Antriebsmotoren (7) umfasst, und anhand von Daten, die im Rahmen der wenigstens einen Überprüfung des Steuerungsprogramms (19) während der Ansteuerung des Test-Antriebssystems durch die Test-Steuerung (27, 35) an der Test-Steuerung (27, 35) und/oder an dem Test-Antriebssystem (29, 36) erfasst und/oder berechnet werden bzw. wurden, ermittelt wird, ob es im Rahmen der Ausführung des Steuerungsprogramms (19) zu Kollisionen kommt.

16. Verfahren nach einem der vorhergehenden Ansprüche,
**dadurch gekennzeichnet, dass**
Daten, die im Rahmen der wenigstens einen Überprüfung des Steuerungsprogramms (19) an der Test-Steuerung (27, 35) und/oder an dem Test-Antriebssystem (29, 36) erfasst und/oder berechnet werden bzw. wurden, einem Anwender (21) insbesondere in Echtzeit in einer 3-D-Umgebung, welche bevorzugt das mögliche Antriebssystem (14) und/oder mechanische System (9) visualisiert, dargestellt werden.

17. Entwurfs-System zur Durchführung des Verfahrens nach einem der vorhergehenden Ansprüche, welches ausgebildet und/oder eingerichtet ist, um
a) die Definition eines Anwendungsfalles entgegenzunehmen, wobei die Definition des Anwendungsfalls zumindest eine Beschreibung eines mechanischen Systems (9) für die Lastbewegung und der Lastbewegung, insbesondere in Form einer Fahrkurve (10), umfasst,
b) eine unter Berücksichtigung des Anwendungsfalles erstellte Beschreibung eines möglichen Antriebssystems (14) entgegenzunehmen, welche die Angabe wenigstens eines Antriebsmotors (7) umfasst,
c) ein Steuerungsprogramm (19) für eine mit dem möglichen Antriebssystem (14) zu verbindende oder verbindbare Steuerung übergeben zu bekommen, wobei das Steuerungsprogramm (19) Steuerbefehle für das mögliche Antriebssystem (14) umfasst,
d) wenigstens eine Überprüfung des Steuerungsprogrammes (19) durchzuführen, für die das Steuerungsprogramm (19) an eine Test-Steuerung (27, 35) übergeben wird, die mit einem Test-Antriebssystem (29, 36) für das mögliche Antriebssystem (14) verbunden ist, und für die das Test-Antriebssystem (29, 36) von der Test-Steuerung (27, 35) gemäß dem Steuerungsprogramm (19) in Echtzeit angesteuert wird, wobei eine Überprüfung des Steuerungsprogramms (19) in einer zumindest teilweise realen Testumgebung (20) erfolgt, wobei während der Ansteuerung des Test-Antriebssystems durch die Test-Steuerung (27, 35) Daten an der Test-Steuerung (27, 35) und/oder an dem Test-Antriebssystem (29, 36) erfasst und/oder berechnet werden, und/oder eine Überprüfung des Steuerungsprogramms (19) in einer virtuellen Testumgebung (21) erfolgt, wobei während der Ansteuerung des Test-Antriebssystems (36) durch die Test-Steuerung (35) Daten an der Test-Steuerung (35) und/oder an dem Test-Antriebssystem (36) erfasst und/oder berechnet werden, und
e) die erfassten und/oder berechneten Daten insbesondere einem Anwender (23) zur Beurteilung der Geeignetheit des Steuerungsprogrammes (19) und/oder des möglichen Antriebssystems (14) für den Anwendungsfall bereitzustellen.

18. System nach Anspruch 17,
**dadurch gekennzeichnet, dass**
das System ausgebildet und/oder eingerichtet ist, um im Rahmen der wenigstens einen Überprüfung des Steuerungsprogrammes (19) das beschriebene mechanische System (9) in Echtzeit zu emulieren.

19. System nach Anspruch 18,
**dadurch gekennzeichnet, dass**
das System einen Emulationsalgorithmus für die Emulation des beschriebenen mechanischen Systems (9) in Echtzeit umfasst, und bevorzugt ausgebildet und/oder eingerichtet ist, um den Emulationsalgorithmus gemäß dem beschriebenen mechanischen System (9) zu parametrieren.

20. System nach Anspruch 18 oder 19,
**dadurch gekennzeichnet, dass**
das System ein Emulations-Lastsystem (32, 33) aufweist, mittels dem das beschriebene mechanische System (9) emuliert werden kann, und das System bevorzugt ausgebildet und/oder eingerichtet ist, um mit dem Emulations-Lastsystem (32, 33) ein reales Test-Antriebssystem (29) oder zumindest wenigstens ein zu dem wenigstens einen Antriebsmotor (7) des beschriebenen Antriebssystems (14) baugleichen oder ähnlichen realen Test-Antriebsmotor (30) derart zu belasten, dass die resultierende Echtzeit-Lastkurve bis auf eine zulässige Abweichung derjenigen Lastkurve entspricht, die sich ergeben würde, wenn die wenigstens eine Last (1) mittels dem möglichen Antriebssystem (14) gemäß der Beschreibung der Lastbewegung bewegt würde.

21. System nach einem der Ansprüche 17 bis 20,
**dadurch gekennzeichnet, dass**
das System ausgebildet und/oder eingerichtet ist, um die Definition des Anwendungsfalles und/oder die Bereitstellung der Beschreibung des möglichen Antriebssystems (14) durch einen Anwender (23) in einer Benutzeroberfläche entgegenzunehmen, wobei der Anwender (23) bevorzugt den Anwendungsfall definiert und/oder das mögliche Antriebssystem (14) beschreibt, indem er in der Benutzeroberfläche Parameter eingibt und/oder indem er aus einer Mehrzahl von ihm in der Benutzeroberfläche angebotenen Auswahlmöglichkeiten auswählt.

22. System nach einem der Ansprüche 17 bis 21,
**dadurch gekennzeichnet, dass**
das System ausgebildet und/oder eingerichtet ist, um nach der Entgegennahme von Eingaben von einem Anwender (23) für die Definition eines Anwendungsfalles und vor der Entgegennahme von Eingaben von einem Anwender (23) zur Beschreibung eines möglichen Antriebssystems (14) unter Berücksichtigung des mechanischen Systems (9) und der Lastbewegung eine resultierende Lastkurve zu berechnen.

23. System nach einem der Ansprüche 17 bis 22,
**dadurch gekennzeichnet, dass**
das System ausgebildet und/oder eingerichtet ist, um nach der Entgegennahme von Eingaben von einem Anwender (23) zur Beschreibung eines möglichen Antriebssystems (14) und vor der Übergabe des Steuerungsprogramms (19) eine Simulation (16) des Gesamtsystems umfassend das mechanische System (9) und das mögliche Antriebssystem (14) und insbesondere die Lastbewegung, durchzuführen, wobei die Simulation (16) bevorzugt unter Verwendung eines Modells durchgeführt wird, welches Teilmodelle zumindest für das mechanische System (9) und/oder das mögliche Antriebssystem (14) umfasst.

24. System nach einem der Ansprüche 17 bis 23,
**dadurch gekennzeichnet, dass**
das System ausgebildet und/oder eingerichtet ist, um Daten, die im Rahmen der wenigstens einen Überprüfung des Steuerungsprogramms (19) an der Test-Steuerung (27, 35) und/oder an dem Test-Antriebssystem (29, 36) erfasst und/oder berechnet werden bzw. wurden, einem Anwender (23) insbesondere in Echtzeit in einer 3-D-Umgebung, welche bevorzugt das mögliche Antriebssystem (14) und/oder mechanische System (9) visualisiert, dargestellt werden.
